# NEW EUROPEAN PATENT SPECIFICATION

(11) **EP 0 374 457 B2**
(45) Date of publication and mention of the opposition decision: **12.07.2000**
(45) Mention of the grant of the patent: 03.04.1996
(21) Application number: 89120780.5
(22) Date of filing: 09.11.1989
(51) Int. Cl.: C08F 2/32, C02F 1/56

(54) **A method of flocculating a dispersion of suspended solids**
Verfahren zum Flocken einer Dispersion von suspendierten Feststoffen
Méthode de floculation d'une dispersion de solides suspendus

(30) Priority: 19.12.1988 US 285938
(43) Date of publication of application: 27.06.1990
(73) Proprietor: CYTEC TECHNOLOGY CORP., Wilmington, Delaware 19801 (US)
(72) Inventor: Kozakiewicz, Joseph J., Trumbull Connecticut (US); Lipp, David Wesley, Stamford Connecticut (US)
(74) Representative: Allam, Peter Clerk

(56) References cited:
- EP-A- 0 128 661
- FR-A- 2 524 895
- FR-A- 2 565 592
- GB-A- 2 118 200
- US-A- 3 284 393
- US-A- 3 374 873
- US-A- 3 968 037
- US-A- 4 021 399
- US-A- 4 052 353
- US-A- 4 077 930
- US-A- 4 319 013
- US-A- 4 439 580
- US-A- 4 521 317
- US-A- 4 681 912
- Journal of Colloids and Interface Science, vol. 101, No. 1, 1984, pp. 167-183
- Römpps Chemie-Lexikon, 7. ed. 1973, pp. 1009-1013, 1478-1479

## Description

This invention relates to a method of flocculating a dispersion of suspended solids, excluding a method of flocculating and draining of dispersions in the production of paper pulps, wherein said dispersion is contacted with a cationic polymer.

High molecular weight cationic copolymers are well known and widely used in a variety of solid-liquid separation applications, particularly in the flocculation of various dispersions of suspended solids, such as biologically treated waste water, e.g. sewage sludge, paper making streams and the like. Modern concerns about environmental pollution and increasing costs of materials have made it highly desirable to produce flocculating and thickening agents which cause higher degrees of separation, work at lower dose levels or both.

Conventionally, high molecular weight, cationic copolymers are produced by polymerization in inverse emulsions or in aqueous solutions. It is recognized in the art that uniform distribution of the monomer moieties along the polymer chain results in copolymers having enhanced performance characteristics vis-a-vis those polymers wherein most of one monomer polymerizes before the second monomer polymerizes resulting in a less uniform distribution, see U.S. Patent No. 4,319,013. In the above described emulsion and solution polymerization procedures, the monomer distribution in the polymer is created as a result of the reactivity of the monomers involved. Thus, said procedures must employ monomers having reactivity ratios relatively similar in order to result in the higher performance polymers and even then the resultant distribution uniformity in ofttimes less than desired.

Coscia, in U.S. Patent No. 4,217,262 attempted to overcome the dissimilarity of monomer reaction ratios by withholding a portion of the more reactive cationic comonomer during polymerization in a water-in-oil emulsion thus imparting a slightly improved distribution to the polymer. Withholding a portion of the cationic comonomer is time consuming, expensive and requires careful continuous motoring of the cationic comonomer during the polymerization reaction. Despite the alleged improvements in monomer distribution obtained using the withholding process, the resultant polymers have not proven to be as satisfactory in use as was anticipated based on the monomer homogeneity expected and the cost involved in their manufacture.

Reference EP-A-0 299 817 discloses an inverse microlatex which was prepared by polymerization of cationic, hydrosoluble vinyl monomers and at least anionic or non-ionic hydrosoluble vinyl monomer in water-in-oil inverse microemulsions. Said inverse microlatex may be used for the flotation and drainage in the production of paper pulp.

Accordingly there remains a need for cationic copolymers which exhibit improved performance characteristics, which polymers are prepared from cationic monomers arid non-ionic monomers having diverse reactivity ratios. Such cationic copolymers and a process for making the seine would satisfy a long felt need and constitute a notable advance in the art.

Candau, ¹³C NMR Study of the Sequence Distribution of Poly(acrylamide-cosodium acrylates) Prepared in Inverse Microemulsions, Macromolecules, 1986, pp. 1895 - 1902, discloses the copolymerization of acrylamide and acrylic acid in water-in-oil inverse microemulsions and the improved structural homogeneity of those copolymers. The author has offered four (4) rationalizations for this improved homogeneity: 1) that the high concentrations of the monomers in the aqueous phase can result in viscosity changes capable of significantly altering the mobilities of the monomers and consequently altering the reaction ratios; 2) that increased screening of the carboxylate groups by the sodium ions, because of higher ionic strength, reduces repulsion between neighboring acrylate units; 3) that the difference in solubilities of the monomers in the continuous oil phase alters the concentration of the monomers at the polymerization locus by governing the diffusion of the monomers from the source droplets; 4) that monomer/monomer complexes, which have been shown to affect reacting ratios, are formed.

The first rationalization is refuted by the author due to the fact that it is difficult to believe that the mobility of such similar molecules as acrylamide and acrylate could differ significantly enough to explain the observed variation.

The second rationalization is rejected based on the similarity in local concentrations of monomers in inverse emulsions and microemulsions.

If the third rationalization is true, the overall reactivity ratio improvements will only occur between monomer pairs which have the appropriate combination of bulk reactivity ratios and solubilities in the oil phase.

If the fourth rationalization is true, only monomers which form monomer/monomer complexes would exhibit the reactivity ratio improvement.

Unexpectedly, it has been found that cationic polymers having improved performance characteristics can be produced from various nonionic monomers and cationic comonomers by inverse microemulsion polymerization procedures. Cationic copolymer products of this invention have been found to be useful in a variety of solid-liquid separation processes, namely flocculation of suspended solids, such as sewage sludge, and settlement of various inorganic suspensions.

According to the present invention there is provided a method of flocculating a dispersion of suspended solids, excluding a method of flocculating and draining of dispersions in the production of paper pulp, wherein said dispersion is contacted with a cationic polymer wherein said polymer is obtainable by an inverse microemulsion produced by:
(a) admixing
   (i) an aqueous solution comprising (1) at least one non-ionic monomer and (2) at least one cationic comonomer;
   (ii) an oil solution comprising at least one hydrocarbon liquid; and
   (iii) an effective amount of a surfactant or surfactant mixture for obtaining an HLB value from 8 to 12, so as to form an water-in-oil inverse microemulsion; and
(b) subjecting the inverse microemulsion having micelles of 10⁻¹ µm or less in diameter, obtained in step (a) to polymerization conditions, thereby forming an inverse microemulsion of said cationic polymer.

It is also contemplated herein that the cationic polymers may be recovered from the water-in-oil inverse microemulsion. Preferably recovery is performed by inverting the microemulsion in an excess of water, optionally in the presence of a breaker surfactant.

The polymers of this invention comprise at least one non-ionic monomer and at least one cationic comonomer. Useful non-ionic monomers include acrylamides, such as acrylamide, and methacrylamide; N-vinyl pyrrolidone; N-alkyl acrylamides, such as N-methylacrylamide, N-octylacrylamide; vinylformamide; hydroxyalkyl(alk)acrylates, such as 2-hydroxyethyl acrylate and methacrylate; hydroxyalkyl(alk)acrylamides such as 3-hydroxypropylacrylamide; as well as mixtures thereof.

Preferred non-ionic monomers include acrylamide, methacrylamide, N,N-dimethylacrylamide and N-vinylpyrrolidone.

Cationic monomers useful in the practice of this invention comprise ethylenically unsaturated monomers of the following formulae: 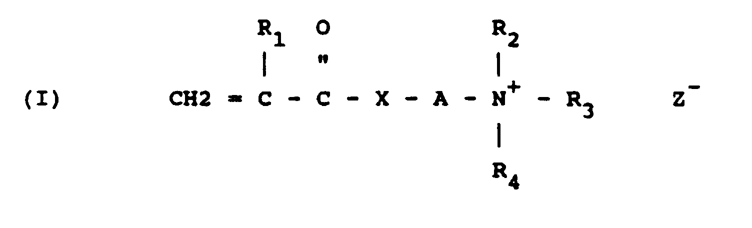 wherein R₁ is hydrogen or methyl, R₂ is hydrogen or lower alkyl of C₁ to C₄, R₃ and/or R₄ are hydrogen, alkyl of C₁ to C₁₂, aryl, or hydroxyethyl and R₂ and R₄ or R₂ and R₃ can combine to form a cyclic ring containing one or more hetero atoms and Z is the conjugate base of an acid, X is oxygen or -NR1 wherein R₁ is as defined above, and A is an alkylene group of C₁ to C₁₂; or 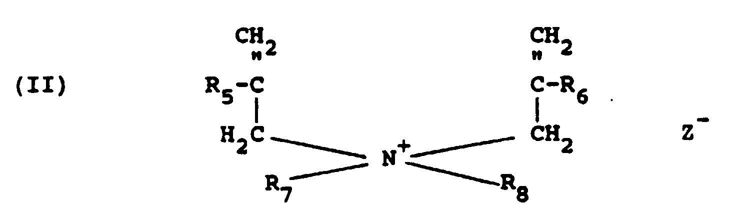 where R₆ and R₆ are hydrogen or methyl, R₇ is hydrogen, alkyl of C₁ to C₁₂ or benzyl and R₈ is hydrogen, alkyl of C₁ to C₁₂ benzyl or hydroxyethyl; and Z is as defined above.

Preferred cationic monomers include diallyl dialkylammonium chlorides, N,N-dialkylaminoalkyl(meth) acrylates and N,N-dialkylaminoalkyl(meth)acrylamides, salts, quaternaries and mixtures thereof.

Furthermore, the polymers hereof may contain small amounts, i.e. up to about 10 mole percent, of other copolymerizable monomers, such as methyl acrylate, methyl methacrylate, acrylonitrile, vinyl acetate, and styrene.

The nonionic monomer(s) may comprise from 1 to 99 parts, by mole, of the polymer and the cationic comonomer(s) may comprise from 99 to 1 part, by mole, of the polymer. The preferred polymer composition comprises from 90 to 45 parts, by mole, of nonionic monomer and from 10 to 55 parts, by mole, of a cationic monomer.

### DETAILED DESCRIPTION OF THE INVENTION

Cationic polymers of improved performance characteristics are formed by the polymerization of at least one non-ionic monomer and at least one cationic comonomer in a water-in-oil inverse microemulsion.

Polymerization in microemulsions and inverse microemulsions is known to those skilled in the art. P. Speiser reported in 1976 and 1977 a process for making spherical "nanoparticles" with diameters less than 8·10⁻² µm (800Å) by(1) solubilizing monomers such as acrylamide and methylenebisacrylamide and other materials, such as drugs, in micelles and (2) polymerizing the monomers, see, J. Pharm. Sa., 65 (12), 1763 (1976) and U.S. 4,021,364. Both water-in-oil and oil-in-water systems can be used to prepare these nanoparticles. While not specifically called microemulsion polymerization by the author, this process does contain all the features which are currently used to define microemulsion polymerization. These reports also constitute the first examples of polymerization of acrylamide in a microemulsion. Since then, numerous publications reporting the polymerization of water-soluble polymers in the inverse phase of microemulsions have appeared, see, for example, U.S. Pat Nos. 4,521,317; 4,681,912; GB 2161492A. In general, microemulsion polymerization processes are conducted by (i) preparing a monomer microemulsion by adding an aqueous solution of the monomers to a hydrocarbon liquid containing an appropriate surfactant or surfactant mixture to thereby form an inverse monomer microemulsion consisting of small aqueous monomer droplets dispersed in the continuous oil phase and (ii) subjecting the monomer microemulsion to polymerization.

In order to obtain an inverse microemulsion, it is generally necessary to use particular conditions whose main parameters are as follows: surfactant concentration, HLB of surfactant or surfactant mixture, temperature, nature of the organic phase and composition of the aqueous phase.

Suitable monomers are non-ionic and cationic and are as defined above. The aqueous monomer solution may contain such conventional additives as are desired. For example, the solution may contain chelating agents to remove polymerization inhibitors, chain-transfer agents, pH adjusters, initiators and other conventional additives.

Essential to the formation of the microemulsion, which may be defined as a transparent and thermodynamically stable emulsion comprising two liquids insoluble in each other and a surfactant in which the micelles are 10⁻¹ µm (1000Å) or less in diameter, is the selection of an appropriate organic phase and surfactant.

The selection of the organic phase has a substantial effect on the minimum surfactant concentration necessary to obtain the inverse microemulsion and may consist of a hydrocarbon or hydrocarbon mixture. Isoparaffinic hydrocarbons or mixtures thereof are the most desirable in order to obtain inexpensive formulations. Typically the organic phase will comprise mineral oil, toluene, fuel oil, kerosene, odorless mineral spirits, and mixtures of any of the foregoing.

The ratio, by weight, of the amounts of aqueous phase and hydrocarbon phase is chosen as high as possible, so as to obtain, after polymerization, a microemulsion of high polymer content. Preferably, this ratio may range, for example, from 0.5 to 3:1, and usually approximates 1:1.

The one or more surfactants are selected in order to obtain an HLB (Hydrophilic Lipophilic Balance) value ranging from 8 to 12. Outside this range, formation of inverse microemulsions generally cannot be attained. In addition to the appropriate HLB value, the concentration of surfactant must be optimized, i.e., sufficient to form inverse microemulsion. Too low a concentration of surfactant leads to the formation of standard inverse emulsions and too high a concentration results in increased costs and does not impart any significant benefit. Typical surfactants useful in the practice of this invention may be anionic, cationic or nonionic. Preferred surfactants include sorbitan monooleate, polyoxyethylene (20) sorbitan monooleate, sodium dioctylsulfosuccinate, oleamidopropyldimethylamine, and sodium isostearyl-2-lactate.

Polymerization of the microemulsion may be carried out in-any manner known to those skilled in the art. Initiation may be effected with a variety of thermal and redox initiators including peroxides such as t-butyl peroxide; azo compounds such as azobisisobutyronitrile; inorganic compounds, such as potassium persulfate and redox couples such as ferric ammonium sulfate/ammonium persulfate.

Polymerization may also be effected by photochemical irradiation processes, such as ultraviolet irradiation or by ionizing radiation with a cobalt 60 source.

The polymers of the present invention are conveniently employed in their use as flocculants as dilute aqueous solutions. These solutions can be formed by inverting the microemulsion into water or by recovering the polymer from the microemulsion such as by stripping or by adding the microemulsion to a solvent which precipitates the polymer, e.g. isopropanol or acetone, filtering off the resultant solids, drying and redispersing in water. The microemulsion can also be stripped to increase the polymer solids percentage thereof.

Thickening and dewatering of dispersions of suspended solids are carried out by adding an effective amount of the cationic copolymers of this invention, in solution form, to the suspension and agitating using a conventional dewatering apparatus to remove water from the suspension.

The products of this invention are useful in facilitating a wide range of solid-liquid separation operations, i.e. wherever conventional cationic polymers are used. That is, they may be used to dewater biologically treated waste water e.g. sewage and other municipal or industrial sludges; and settlement of various inorganic suspensions.

A possible explanation, although not wishing to be bound by any theory, for the improved performance of the cationic copolymers of this invention is an improved cationic monomer distribution. This unexpected homogeneity of cationic groups along the polymer chain is exemplified by the improved matching of monomer reactivity ratios obtained in inverse microemulsion polymerization. For example, the reactivity ratios of acrylamide (AMD) and methacryloxyethyltrimethylammonium chloride (Q-6) have been reported to be r_{AMD} = 0.20 and r_{Q-6} = 1.76 for inverse emulsion polymerization (see US. 4,396,752). Using inverse microemulsion polymerization, the reactivity ratios are found to be r_{AMD} = 0.74 and r_{Q-6} = 1.23. Consequently, the composition of AMD/Q-6 inverse microemulsion copolymers is likely to be more homogeneous than AMD/Q-6 copolymers prepared by inverse emulsion or solution polymerization and account for the superior performance of these copolymers as shown below.

### DESCRIPTION OF THE PREFERRED EMBODIMENTS

The following examples illustrate the present invention. They are not to be construed to limit the claims in any manner whatsoever.

As used herein: 1) Bulk Viscosity (BV) of emulsions is measured at 25±1°C in a Brookfield viscometer (LVT model) with a #2 spindle at 12 rmp. 2) Standard Viscosity (SV) is measured by adding 50g of a 0.2% aqueous polymer solution to 50g of water, stirring the resulting mixture for 5 minutes to completely dissolve the salt, adjusting the pH to 5 and determining the viscosity at 25±0.1°C using a Brookfield viscometer (LVT model) with UL adapter at 60 rpm.

### EXAMPLES 1 - 30

Examples 1 - 26 and 30 describe a variety of acrylamide and N,N-dimethylacrylamide, cationic co- and terpolymers prepared by microemulsion polymerization.

### EXAMPLE 1

15.0g of polyoxyethylenesorbitari trioleate (POST), 15.0g of polyoxyethylenesorbital hexaoleate (PESH) and 0.042g of 2,2'-azobis(4-methoxy-2,4-dimethylvaleronitrile) (Initiator A) are dissolved in 120g of an isoparaffinic solvent having a b.p. of 207-254°C (IPS) to form an oil solution. Separately, an aqueous monomer solution of 14.25g acrylamide (AMD). 28.08g of methacryloyloxyethyl trimethylammonium chloride (Q-6), 0.02g of N-(2-hydroxyethyl)ethylenediamine triacetic acid (HETA) and 55.11g of water is prepared and adjusted to pH 3.0 with 10 percent aqueous HCl. The aqueous monomer solution is then added to the oil solution producing a clear microemulsion. The microemulsion is sparged with nitrogen and heated to 40°C to initiate polymerization. The polymerization is continued for approximately 6 hours and produces a clear, stable microemulsion containing a copolymer of AMD/Q-6 with an S.V. of 3.6 cps, see Table 1.

### EXAMPLES 2 - 26

The cationic, copolymer microemulsions of these examples are prepared similarly to the microemulsion copolymer of Example 1 with the compositions and resulting properties outlined in Table 1, below. Acronyms in Example 1 and Table 1 pertain to all examples following.

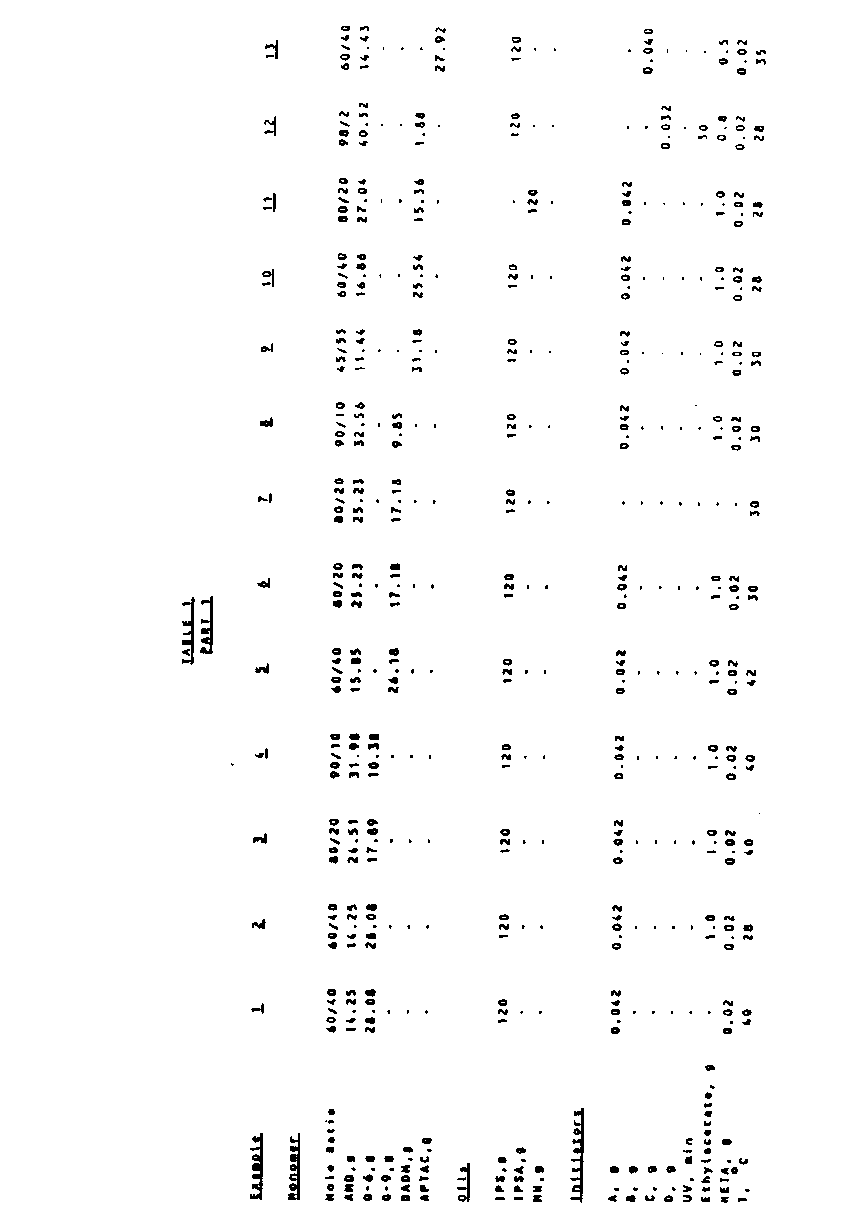

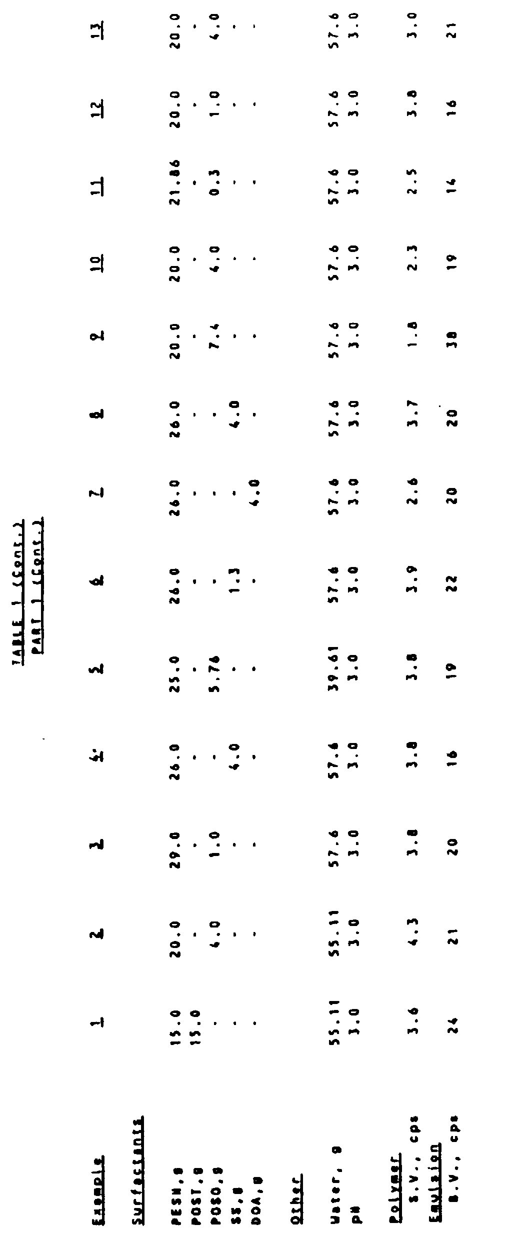

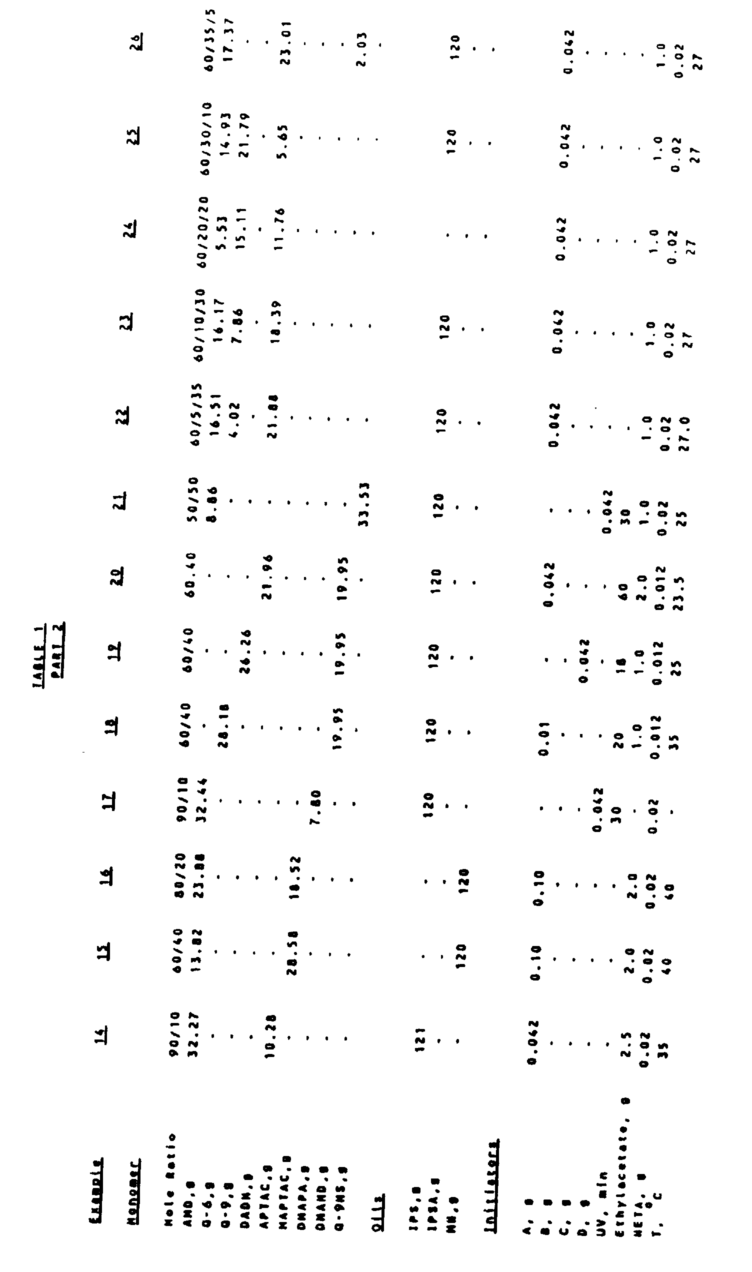

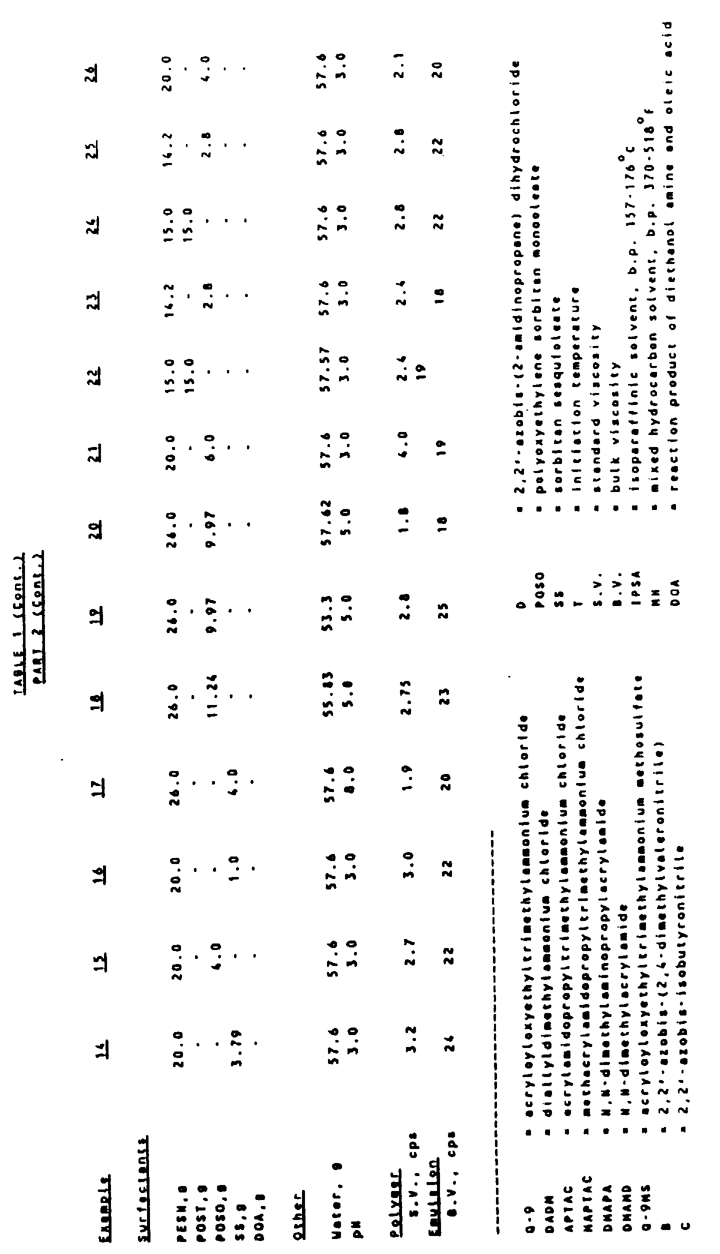

### EXAMPLES 27 - 29

Examples 27 and 28 are comparative examples of AMD cationic copolymers prepared by conventional inverse emulsion polymerization. Example 29 is a comparative example of an AMD cationic copolymer prepared by the continuous addition inverse emulsion polymerization technique taught by Coscia in USP 4,217,262.

### EXAMPLE 27 (COMPARATIVE)

### AMD/Q-6 (60/40) Inverse Emulsion Copolymer

21.0g of sorbitan monooleate (SM) are dissolved in 173.4g of an aliphatic solvent having a b.p. of 197-241°C (LOPS) to prepare an oil solution. Separately, an aqueous solution of 83.15g AMD, 166.85g of Q-6, 4.9g of adipic acid, 1.22g of 2-propanol and 0.25 g of ethylenediamine-tetraacetic acid (EDTA) disodium salt are added to 242.11g of water to prepare a comonomer solution, the pH of which is adjusted to 3.5 with 2.0g of 20% aqueous sulfuric acid. The aqueous comonomer solution is then added to the oil solution and the mixture emulsified. The emulsion is transferred to a suitable vessel, agitated and sparged with nitrogen for one hour. 2.5g of 2.0 percent tertiary butyl hydroperoxide in mineral spirits are added and the polymerization is initiated by addition of sodium bisulfite in water at 30°C. The polymerization is continued for 5 hours. The resultant copolymer has a standard viscosity of 3.3 cps. The inverse emulsion has a bulk viscosity of 660 cps.

### EXAMPLE 28 (COMPARATIVE)

### AMD/DADM (60/40) Inverse Emulsion Copolymer

21.0g of SM are dissolved in 173.4g of LOPS to form an oil solution. Separately, an aqueous solution of 97.44g of AMD, 147.57g of DADM, 4.9g of adipic acid, 0.61g of 2-propanol and 0.25 g of EDTA are added to 242.11g of water to form a monomer solution, the pH of which is adjusted to 3.5 with 4.5g of 20% aqueous sulfuric acid. The aqueous comonomer solution is then added to the oil solution and the mixture emulsified. The emulsion is transferred to a suitable vessel, agitated, and sparged with nitrogen for one hour. 2.5g of 2.0 percent tertiary butyl hydroperoxide in mineral spirits are added and the polymerization is initiated by addition of sodium bisulfite in water at 30°C. The polymerization is continued for 5 hours. The copolymer has a standard viscosity of 1.9 cps. The inverse emulsion has a bulk viscosity of 480 cps.

### EXAMPLE 29 (COMPARATIVE)

The procedure of Example 1 of USP 4,217,262 is followed to prepare a 60/40 AMD/Q-6 inverse emulsion copolymer by the incremental addition technique thereof. 21.0g of SM are dissolved in LOPS to prepare an oil solution. Separately, an aqueous solution of 290.0g of a 51.7 percent aqueous solution of AMD, 44.08g of a 75 percent aqueous solution of Q-6, 1.5g of 2-propanol and 0.25g of EDTA, is prepared. A third solution of 89.33g of a 75 percent aqueous solution of Q-6 monomer is also prepared. The AMD containing aqueous monomer solution is then added to the oil solution and emulsified. To the resulting inverse emulsion are added 2.5g of 70 percent t-butyl hydroperoxide. The emulsion is deaerated with nitrogen and the temperature is adjusted to 30°C. Polymerization is initiated by metering in a deaerated solution of 0.56g of sodium metabisulfite in 250 ml of water at a rate of 0.014 ml/minute. When the batch temperature reaches 35°C, the Q-6 monomer solution is metered in at a rate of 0.4 ml/min. The batch temperature is allowed to rise to 40°C. After 4 hours, the rate of addition of the sodium metabisulfite is doubled for an additional 2 hours. The conversion of acrylamide is 97.5% and the standard viscosity of the copolymer is 3.2 cps. The inverse emulsion has a bulk viscosity of 1300 cps.

### EXAMPLE 30

25.52g of POST, 4.47g of SM and 1.06g of a 2 percent solution of benzoin isobutyl ether in IPS are dissolved in 117.88g of IPS to produce an oil solution. Separately, an aqueous monomer solution of 25.44g of AMD, 16.96g of Q-6, 0.021g of EDTA and 57.7g of water is prepared and adjusted to pH 3.0 with 20 percent aqueous sulfuric acid. The aqueous monomer solution is then added to the oil solution producing a clear microemulsion. The microemulsion is sparged with nitrogen and polymerization is initiated with UV light at 25°C. The polymerization is continued for approximately one half hour and produces a clear, stable microemulsion comprising an AMD/Q-6 copolymer with an S.V. of 3.1 cps and an emulsion bulk viscosity of 18 cps.

### EXAMPLE 31

The performances of microemulsion and inverse emulsion cationic copolymer flocculants are determined by measuring their ability to dewater municipal sludge by the following procedure: 200 grams of sludge are carefully weighed into screwcap jars. Aqueous solutions of the flocculants are prepared by inverting the emulsions into water so that the polymer concentration is 0.2%. Various dosages of polymer are added to each sludge sample, water is added to bring the total weight to 250 g, the mixture is agitated for 90 seconds, the resulting flocculated sludge poured into a Buchner funnel containing a filter cloth, and the free drainage determined by measuring the volume of filtrate collected in 10 seconds. The results are shown in Tables 2-4, below. The superior performance of the AMD/Q-6 microemulsion copolymers of the present invention (Example 1) versus AMD/Q-6 inverse emulsion copolymers (Comparative Example 27) is clearly seen when comparing their free drainage performance on Greenwich, CT. sludge (Table 2). The superior performance of AMD/DADM microemulsion copolymers of the present invention (Example 10) versus AMD/DADM inverse emulsion copolymers (Comparative Example 28) is clearly seen when comparing their free drainage performance on Stamford, CT. sludge (Table 3). The superior performance of AMD/Q-6 microemulsion copolymers of the present invention (Example 30) versus AMD/Q-6 inverse emulsion copolymers (Comparative Example 29) made by the incremental addition technique of USP 4,217,262 is clearly seen when comparing their free drainage performance on Stamford, CT sludge (Table 4).

**TABLE 2**

| Polymer of Example No. | Dose (ml) | Filtrate (ml) |
|---|---|---|
| 1 | 10 | 38 |
| | 15 | 132 |
| | 20 | 150 |
| | 25 | 140 |
| 27C | 15 | 62 |
| | 20 | 132 |
| | 25 | 166 |
| | 35 | 141 |

**TABLE 3**

| Polymer of Example No. | Dose (ml) | Filtrate (ml) |
|---|---|---|
| 10 | 15 | 112 |
| | 17.5 | 126 |
| | 20 | 140 |
| | 22.5 | 142 |
| | 25 | 133 |
| 28C | 15 | 90 |
| | 17.5 | 108 |
| | 20 | 117 |
| | 22.5 | 138 |
| | 25 | 135 |

**TABLE 4**

| Polymer of Example No. | Dose (ml) | Filtrate (ml) |
|---|---|---|
| 30 | 8 | 110 |
| | 10 | 135 |
| | 11 | 148 |
| | 12 | 168 |
| | 14 | 170 |
| 29C | 10 | 135 |
| | 11 | 152 |
| | 12 | 155 |
| | 14 | 146 |
| | 18 | 140 |

### EXAMPLE 32

The procedure of Example 1 is again followed except that Q-6 is replaced by N,N-dimethylaminoethylacrylate. Similar results are achieved.

### EXAMPLES 33 - 35

The procedure of Example 1 is again followed except that the acrylamide is replaced by 33) N-vinylpyrrolidone, 34) N-methylacrylamide and 35) hydroxyethyl acrylate. The results are similar in each instance.

### EXAMPLES 36 AND 37

The procedure of Example 1 is followed except that Q-6 is replaced by 36)methacryloyloxyethyl trimethyl ammonium methosulfate, 37) acryloyloxyethyltrimethyl ammonium methosulfate. The results are substantially equivalent in each instance.

## Claims

1. A method of flocculating a dispersion of suspended solids, excluding a method of flocculating and draining of dispersions in the production of paper pulp, wherein said dispersion is contacted with a cationic polymer, wherein said polymer is obtainable by an inverse microemulsion produced by:
(a) admixing
(i) an aqueous solution comprising (1) at least one non-ionic monomer and (2) at least one cationic comonomer;
(ii) an oil solution comprising at least one hydrocarbon liquid; and
(iii) an effective amount of a surfactant or mixture to provide an HLB value of from 8 to 12, so as to form an inverse water-in-oil microemulsion; and
(b) subjecting the inverse microemulsion having micelles of 10⁻¹ µm or less in diameter, obtained in step (a) to polymerization conditions, thereby forming an inverse microemulsion of said cationic polymer.

2. The method as defined in Claim 1 wherein the process also includes step (c) comprising recovering the polymer from the microemulsion.

3. The method as defined in Claim 1 wherein said non-ionic monomer comprises an acrylamide, vinyl formamide, an hydroxyalkyl(alk)acrylamide, N-vinyl pyrrolidone, an N-alkyl acrylamide, an N,N-dialkylacrylamide, an hydroxyalkyl(alk)acrylate and mixtures thereof.

4. The method as defined in Claim 3 wherein said non-ionic monomer comprises an acrylamide.

5. The method as defined in Claim 1 wherein said cationic monomer comprises diallyldialkylammonium chlorides, N,N-dialkylaminoalkyl(meth)acrylates. N,N-diaikylaminoalkyl(meth)acrylamides, salts and quaternaries thereof, as well as mixtures thereof.

6. The method as defined in Claim 1 wherein said cationic polymer comprises from 1 to 99 parts by mole of said non-ionic monomer and from 99 to 1 parts by mole of said cationic comonomer.

7. The method as defined in Claim 5 wherein said cationic polymer comprises from 1 to 99 parts by mole of an acrylamide non-ionic monomer and from 99 to 1 parts by mole of said cationic monomer.

8. The method as defined in Claim 1 wherein said dispersion of suspended solids comprises biologically treated waste water.

9. The method as defined in Claim 1 wherein said polymer comprises from 99 to 1 parts by mole of an acrylamide non-ionic monomer and from 1 to 99 parts by mole of a cationic monomer

10. A method as defined in Claim 1 wherein the cationic monomer is diallyldimethylammonium chloride.

11. A method as defined in Claim 1 wherein the cationic monomer is methacryloyloxyethyltrimethylammonium chloride or methosulfate.

12. A method as defined in Claim 1 wherein the cationic monomer is methacrylamidopropyltrimethylammoniurn chloride.

13. A method as defined in Claim 1 wherein the cationic monomer is acryloyloxyethyltrimethylammonium chloride or methosulfate.

14. A method as defined in Claim 1 wherein the cationic monomer is acrylamidopropyltrimethylammonium chloride.

15. A method as defined in Claim 1 wherein the polymer is obtainable by the microemulsion by inverting the microemulsion into an excess of water.

16. A method as defined in Claims 9-14 wherein the non-ionic polymer is acrylamide.

## Patentansprüche

1. Verfahren zur Ausflockung einer Dispersion suspendierter Feststoffe, ausschließlich eines Verfahrens zur Ausflockung und zur Entwässerung von Dispersionen bei der Herstellung von Papiermasse, wobei die Dispersion mit einem kationischen Polymer kontaktiert wird, wobei das Polymer erhältlich ist durch eine inverse Mikroemulsion, hergestellt durch:
(a) Mischen
(i) einer wäßrigen Lösung umfassend (1) mindestens ein nichtionisches Monomer und (2) mindestens ein kationisches Comonomer;
(ii) einer Öllösung umfassend mindestens eine Kohlenwasserstoffflüssigkeit; und
(iii) einer wirksamen Menge eines oberflächenaktiven Stoffes oder eines Gemisches, um einen HLB-Wert von 8 bis 12 bereitzustellen, um dadurch eine inverse Wasser-in-Öl-Mikroemulsion zu bilden; und
(b) Aussetzen der in Schritt (a) erhaltenen inversen Mikroemulsion mit Mizellen von 10⁻¹ µm oder weniger im Durchmesser Polymerisationsbedingungen, wodurch eine inverse Mikroemulsion des kationischen Polymers gebildet wird.

2. Verfahren gemäß Anspruch 1, bei dem das Verfahren ebenso Schritt (c) mit der Gewinnung des Polymers von der Mikroemulsion umfaßt.

3. Verfahren gemäß Anspruch 1, bei dem das nichtionische Monomer ein Acrylamid, Vinylformamid, ein Hydroxyalkyl(alk)acrylamid, N-Vinylpyrrolidon, ein N-Alkylacrylamid, ein N,N-Dialkylacrylamid, ein Hydroxyalkyl(alk)acrylat und Mischungen davon aufweist.

4. Verfahren gemäß Anspruch 3, bei dem das nichtionische Monomer ein Acrylamid umfaßt.

5. Verfahren gemäß Anspruch 1, bei dem das kationische Monomer Diallydialkylammoniumchloride, N,N-Dialkylaminoalkyl(meth)acrylate, N,N-Dialkylaminoalkyl(meth)acrylamide, Salze und quaternäre Verbindungen davon sowie Mischungen davon umfaßt.

6. Verfahren gemäß Anspruch 1, bei dem das kationische Polymer 1 bis 99 Molteile des nichtionischen Monomers und 99 bis 1 Molteile des kationischen Comonomers umfaßt.

7. Verfahren gemäß Anspruch 5, bei dem das kationische Polymer 1 bis 99 Molteile eines nichtionischen Acrylamidmonomers und 99 bis 1 Molteile des kationischen Monomers umfaßt.

8. Verfahren gemäß Anspruch 1, bei dem die Dispersion suspendierter Feststoffe biologisch behandeltes Abwasser enthält.

9. Verfahren gemäß Anspruch 1, bei dem das Polymer 99 bis 1 Molteile eines nichtionischen Acrylamidmonomers und 1 bis 99 Molteile eines kationischen Monomers umfaßt.

10. Verfahren gemäß Anspruch 1, bei dem das kationische Monomer Diallyldimethylammoniumchlorid ist.

11. Verfahren gemäß Anspruch 1, bei dem das kationische Monomer Methacryloyloxyethyltrimethylammoniumchlorid oder -methosulfat ist.

12. Verfahren gemäß Anspruch 1, bei dem das kationische Monomer Methacrylamidopropyltrimethylammoniumchlorid ist.

13. Verfahren gemäß Anspruch 1, bei dem das kationische Monomer Acryloyloxyethyltrimethylammoniumchlorid oder -methosulfat ist.

14. Verfahren gemäß Anspruch 1, bei dem das kationische Monomer Acrylamidopropyltrimethylammoniumchlorid ist.

15. Verfahren gemäß Anspruch 1, bei dem das Polymer durch die Mikroemulsion erhältlich ist, indem die Mikroemulsion in einen Überschuß von Wasser invertiert wird.

16. Verfahren gemäß Ansprüchen 9 - 14, bei dem das nichtionische Polymer Acrylamid ist.

## Revendications

1. Procédé de floculation d'une dispersion de matières solides en suspension, à l'exclusion d'un procédé de floculation et d'assèchement de dispersions dans la production de pâte à papier, dans lequel ladite dispersion est mise en contact avec un polymère cationique préparé d'au moins un monomère non ionique et d'au moins un monomère cationique, ledit polymère ayant été preparé par un procédé de polymérisation d'une microémulsion inverse comportant les étapes suivantes:
(a) mélanger
(i) une solution aqueuse comprenant (1) au moins un monomère non ionique et (2) au moins un comonomère cationique ; (ii) une solution huileuse comprenant au moins un liquide hydrocarboné ; et (iii) une quantité efficace d'un tensioactif ou d'un mélange pour obtenir une valeur de HLB (balance hydrophile-lipophile) qui va de 8 à 12, de façon à former une microémulsion inverse eau-dans-huile ; et
(b) soumettre la microémulsion inverse ayant des micelles de 10⁻¹ µm ou moins de diamètre, obtenue dans l'étape (a), à des conditions de polymérisation, en formant ainsi une microémulsion inverse dudit polymère cationique.

2. Procédé selon la revendication 1, dans lequel le procédé comprend également l'étape (c) consistant à récupérer le polymère depuis la microémulsion.

3. Procédé selon la revendication 1, dans lequel ledit monomère non ionique est constitué d'un acrylamide, d'un vinyl formamide, d'un hydroxyalkyl(alk)acrylamide, de N-vinyl pyrrolidone, d'un N-alkyl acrylamide, d'un N,N-dialkylacrylamide, d'un hydroxyalkyl(alk)acrylate et de leurs mélanges.

4. Procédé selon la revendication 3, dans lequel ledit monomère non ionique est constitué d'un acrylamide.

5. Procédé selon la revendication 1, dans lequel ledit monomère cationique comprend les chlorures de diallyldialkylammonium, les N, N-dialkylaminoalkyl(méth)acrylates, les N,N-dialkylaminoalkyl(méth)acrylamides, les sels et composés quaternaires de ceux-ci ainsi que leurs mélanges.

6. Procédé selon la revendication 1, dans lequel ledit polymère cationique est constitué de 1 à 99 parties en moles dudit monomère non ionique et de 99 à 1 parties en moles dudit comonomère cationique.

7. Procédé selon la revendication 5, dans lequel ledit polymère cationique est constitué de 1 à 99 parties en moles d'un monomère acrylamide non ionique et de 99 à 1 parties en moles dudit monomère cationique.

8. Procédé selon la revendication 1, dans lequel ladite dispersion de matières solides en suspension comprend des eaux usées traitées biologiquement.

9. Procédé selon la revendication 1, dans lequel ledit polymère est constitué de 99 à 1 parties en moles d'un monomére acrylamide non ionique et de 1 à 99 parties en moles d'un monomère cationique.

10. Procédé selon la revendication 1, dans lequel le monomère cationique est le chlorure de diallyldiméthylammonium.

11. Procédé selon la revendication 1, dans lequel le monomère cationique est le chlorure ou le méthosulfate de méthacryloyloxyéthyltriméthylammonium.

12. Procédé selon la revendication 1, dans lequel le monomère cationique est le chlorure de méthacrylamidopropyltriméthylammonium.

13. Procédé selon la revendication 1, dans lequel le monomère cationique est le chlorure ou le méthosulfate d'acryloyloxyéthyltriméthylammonium.

14. Procédé selon la revendication 1, dans lequel le monomère cationique est le chlorure d'acrylamidopropyltriméthylammonium.

15. Procédé selon la revendication 1, dans lequel le polymère peut être obtenu par la microémulsion en inversant la microémulsion dans un excès d'eau.

16. Procédé selon les revendications 9 à 14, dans lequel le polymère non ionique est l'acrylamide.
